Europäisches Patentamt

European Patent Office

Office européen des brevets

(19)

(11) Numéro de publication: **0 005 390**
**B1**

(12) # FASCICULE DE BREVET EUROPEEN

(45) Date de publication du fascicule de brevet: **25.11.81**

(51) Int. Cl.³: **C 02 F 1/56 //C08G12/32**

(21) Numéro de dépôt: **79400256.8**

(22) Date de dépôt: **23.04.79**

(54) Procédé de traitement des eaux brutes et des eaux résiduaires et son application.

(30) Priorité: **24.04.78 FR 7812092**

(43) Date de publication de la demande:
**14.11.79 Bulletin 79/23**

(45) Mention de la délivrance du brevet:
**25.11.81 Bulletin 81/47**

(84) Etats Contractants Désignés:
**BE CH DE FR GB IT NL SE**

(56) Documents cités:
**FR - A - 1 602 233**
**FR - A - 2 257 548**
**US - A - 3 484 837**
**US - A - 3 880 753**

(73) Titulaire: **SOCIETE FRANCAISE HOECHST Société anonyme dite:**
**3, avenue du Général de Gaulle**
**F-92800 Puteaux (FR)**

(72) Inventeur: **Trouve, Claude**
**62 boulevard de Port Royal**
**F-75005 Paris (FR)**
Inventeur: **Cabestany, Jean**
**127, boulevard Maxime Gorki**
**F-93240 Stains (FR)**

(74) Mandataire: **Rinuy, Guy et al,**
**Cabinet Rinuy et Santarelli 14, Avenue de la Grande Armée**
**F-75017 Paris (FR)**

EP 0 005 390 B1

Courier Press, Leamington Spa, England.

# Procédé de traitement des eaux brutes et des eaux résiduaires et son application

La présente invention concerne un procédé de traitement par floculation des eaux brutes et des eaux résiduaires.

Les eaux brutes que l'on trouve dans la nature et les eaux résiduaires provenant des installations industrielles contiennent habituellement des matières minérales ou organiques, en solution, en émulsion ou en suspension dont il convient de les débarrasser en vue de leur utilisation ou de leur rejet dans la nature. Cette élimination des matières minérales ou organiques est généralement effectuée par floculation, suivie d'une décantation ou d'une filtration, de façon à obtenir comme produit final une eau relativement pure.

On connaît de nombreux agents de coagulation, minéraux ou organiques utilisés pour la floculation. Parmi les coagulants minéraux, les plus connus sont le sulfate d'alumine, le chlorure ferrique et les polychlorures d'aluminium. Divers types de coagulants organiques, cationiques ou anioniques ont été proposés; on en trouve une liste dans le brevet des Etats-Unis d'Amérique n° US—A—3 377 274. Des résines aminoplastes cationiques de condensation de la mélamine et du formaldéhyde, dont certains groupes $NH_2$ non méthylolés sont sous forme de sels, ont par exemple été préconisés dans le brevet français n° FR—A—2 257 548.

Selon ce brevet, ces résines mélamine-formaldéhyde, solubles dans l'eau, dans lesquelles le groupement amino auquel n'est attaché aucun groupement méthylol est salifié par un acide minéral ou organique, sont décrites par H.P. WOHNSIEDLER, Ind. and Eng. Chem., 1952, 44, 2679—86 et ont déjà été préconisées pour l'amélioration de la résistance du papier à l'état humide selon le brevet des Etats-Unis d'Amérique n° US—A—2 345 543. Le procédé décrit dans le brevet français FR—A—2 257 548 est mis en oeuvre dans une certaine gamme de pH: de pH = 5 (exemple 3) à pH = 10 (exemple 5) nésessitant la détermination, avant traitement, du pH des eaux à traiter et, si nécessaire, son ajustement à la valeur convenable (voir exemple 3). Ainsi, lors de la mise en oeuvre du procédé, on est amené à introduire, dans certains cas, des électrolytes (ions chlorures selon l'exemple 3) qui peuvent s'avérer gênants pour l'utilisation ultérieure des eaux traitées. Dans ce même domaine de la technique le brevet des Etats-Unis d'Amérique n° US—A—3 484 837 dévoile l'utilisation de résines mélamine-formaldéhyde, solubles dans l'eau, cationiques, dans le traitement des eaux résiduaires et plus particulièrement pour l'élimination des détergents non-biodégradables. Préférentiellement, le procédé est mis en oeuvre en présence de sulfate d'aluminium (alun de papeterie). Comme précédemment, dans certains cas, le pH des eaux à traiter doit être ajusté à une valeur convenable: pH = 7—7,5 selon l'exemple 21.

Dans le traitement des eaux brutes et des eaux résiduaires, un problème particulièrement difficile à résoudre est la floculation des suspensions ou émulsions de faibles concentrations, inférieures à 1 g/l. Il faut en effet que les coagulants utilisés non seulement produisent des flocs mais encore que ces flocs soient suffisamment gros pour décanter. Jusqu'à présent ce sont surtout les coagulants minéraux qui donnent des résultats satisfaisants; les coagulants organiques connus fournissent généralement des résultats nettement insuffisants. Cependant, les coagulants minéraux, s'ils ont l'avantage d'être peu coûteux, présentent un certain nombre d'inconvénients: ils sont notamment très sensibles aux conditions de pH des eaux à traiter et ils introduisent dans ces eaux des électrolytes qui peuvent s'avérer gênants pour l'utilisation ultérieure des eaux traitées.

On a maintenant trouvé que les résines aminoplastes (produits de condensation d'un aldéhyde et d'une amine ou d'un amide) quaternisées dans lesquelles l'aldéhyde est du glyoxal ou un mélange de glyoxal et de formaldéhyde et le composé azoté est de la mélamine ou de la mélamine avec un peu d'urée possédaient des propriétés floculantes comparables à celles des coagulants minéraux pour les eaux peu chargées en matières en suspension ou en émulsion et des propriétés décolorantes. Les résines mélamine/glyoxal/formaldéhyde ou mélamine/urée/glyoxal/formaldéhyde sont plus particulièrement efficaces dans cette utilisation. Des résines de ce type sont connues et certaines sont, par exemple, décrites dans le brevet français N° FR—A—1 602 233 pour améliorer temporairement la résistance du papier à l'état humide. Ces résines quaternisées présentent sur les coagulants minéraux l'avantage d'être moins sensibles aux conditions de pH, de ne pas introduire d'électrolytes dans les eaux, de ne pas en modifier le pH, d'être efficaces seules, sans nécessiter des additifs (silice activée, autre floculant organique) et enfin de fournir des quantités de boues plus faibles que les produits minéraux, essentiellement parce qu'elles sont utilisées à doses plus faibles, d'où une réduction du volume de l'appareillage nécessaire. En outre, les boues obtenues avec les résines de condensation utilisables selon l'invention sont plus facilement déshydratables que celles obtenues avec les produits minéraux et du fait que le floculant lui-même est organique elles sont plus facilement incinérables. Les résines de condensation quaternisées selon l'invention sont, par ailleurs, plus stables au stockage que les résines mélamine/formaldéhyde cationiques sous forme de sels; elles sont aussi naturellement moins sensibles aux conditions de pH et elles ne nécessitent donc généralement pas d'ajustement préalable du pH des eaux à traiter.

En outre, les résines de condensation quaternisées selon l'invention possèdent comme les autres résines aminoplastes cationiques des propriétés floculantes et décolorantes sur les eaux plus chargées en matières en suspension, en émulsion ou en solution.

Les résines de condensation quaternisées utilisables selon l'invention sont préparées en condensant, en milieu aqueux, à pH compris entre 5 et 8, à température inférieure à 100°C la mélamine, ou la mélamine et l'urée avec le glyoxal ou de préférence un mélange de glyoxal et de formaldéhyde puis en quaternisant à la même température, de préférence avec du sulfate de diméthyle selon le procédé décrit dans le brevet français N° 1 602 233. Les proportions moléculaires les plus avantageuses sont pour une mole de mélamine, 2 à 4 moles de glyoxal et 0,5 à 3 moles de formaldéhyde, de préférence 3 moles de glyoxal et de 1 à 3 moles de formaldéhyde. La quaternisation est effectuée avec 0,2 à 0,5 mole de sulfate de diméthyle par mole de mélamine. On peut sans inconvénient ajouter jusqu'à 0,2 mole d'urée par mole de mélamine; on abaisse ainsi la viscosité et améliore la stabilité au stockage des résines. Celles-ci sont obtenues en solutions aqueuses à des concentrations pouvant atteindre 20% de matières actives et sont particulièrement stables sous cette forme.

Selon l'invention, les résines de condensation quaternisées ci-dessus sont utilisées à des doses exprimées en résine 100% comprises entre 2 ppm et 500 ppm, de préférence 4 à 20 ppm pour les eaux brutes et 30 à 300 ppm pour les eaux résiduaires. Il est également possible de les utiliser conjointement avec d'autres coagulants, comme les coagulants minéraux ou les coagulants organiques, anioniques ou cationiques; par exemple, les copolymères acryliques à base d'acrylamide solubles dans l'eau.

Ainsi qu'il a déjà été signalé, les résines de condensation mélamine/glyoxal/formaldéhyde ou mélamine/urée/glyoxal/formaldéhyde quaternisées peuvent être utilisées dans une large gamme de pH, pratiquement à des pH pouvant varier de 4,5 à 8, donc, dans la plupart des cas, sans nécessiter un ajustement préalable du pH des eaux à traiter.

Comme pour tous les coagulants, il importe d'effectuer le plus rapidement possible le mélange des eaux à floculer avec le coagulant; il est conseillé d'utiliser dans ce but par exemple un hydro-injecteur. Les flocs qui se forment alors atteignent généralement une taille optimale après 1/2 heure.

Ainsi qu'il a déjà été indiqué, les résines de condensation mélamine/glyoxal/formaldéhyde ou mélamine/urée/glyoxal/formaldéhyde quaternisées sont utilisables tout particulièrement pour le traitement des eaux brutes (eaux de surface ou eaux de nappe) et des eaux résiduaires (effluents industriels, liquides de coupe chargés de particules métalliques et analogues) dans lesquelles les matières solides, minérales ou organiques, sont en suspension ou sous forme plus ou moins colloïdale (argiles, bentonites, algues, poussières, oxydes de fer, etc.) ou en émulsion (huiles, hydrocarbures, etc.) ou sont colorées (colorants textiles etc.) mais elles peuvent également être employées avec succès pour les suspensions et émulsions à concentrations relativement élevées.

Le traitement selon l'invention permet la réutilisation des eaux en résultant, ce traitement ayant pour effet de débarrasser les eaux des impuretés qui les souillent sans leur faire perdre totalement les autres propriétés qu'elles pourraient éventuellement posséder du fait de la présence de substances intéressantes dissoutes. Ce serait par exemple le cas de certains liquides de coupe renferment des additifs anti-corrosifs, liquides qui, après traitement les débarrassant des particules métalliques, conserveraient leurs propriétés anti-corrosives, les rendant ainsi propres à une nouvelle utilisation. Il en serait de même pour les émulsions du type huile dans l'eau ou eau dans l'huile; le traitement selon l'invention permet la séparation des phases liquides et la réutilisation de la phase aqueuse. On peut aussi citer des eaux chargées de colorants et qui, après traitement, peuvent être réutilisées.

Les exemples suivants très divers sont donnés à titre d'illustration, mais ils ne sauraient constituer une limitation de l'invention.

Exemple 1

Préparation de résines utilisables selon l'invention:

*Résine A:*

On mélange dans l'ordre et sous agitation 25,2 g (0,2 mole) de mélamine, 86 g (0,6 mole) de glyoxal aqueux à 40% et 27,2 g (0,4 mole) de formaldéhyde en solution aqueuse à 44%. On porte au bain-marie à 60°C pendant 2 heures puis on ajoute progressivement à même température 12,6 g (0,1 mole) de sulfate de diméthyle. On maintient chauffage et agitation pendant 4 heures 30 après la coulée. On amène la concentration finale à 18% en diluant avec de l'eau. La stabilité au stockage de la résine est supérieure à 6 mois.

*Résine B:*

On porte à 70°C le mélange de 53,5 g (0,84 mole) de formaldéhyde aqueux à 47%, 180 g (1,24 mole) de glyoxal aqueux à 40%, 5 g (0,084 mole) d'urée et 52 g (0,413 mole) de mélamine et on maintient à cette température jusqu'à ce que 1 ml de résine prélevée précipite dans 100 ml d'eau distillée. On ajoute alors progressivement 26 g (0,206 mole) de sulfate de diméthyle et on maintient pendant 1 heure à 75°C environ. On coule alors rapidement 685 g d'eau et refroidit à 30°C; on obtient une solution de résine à 18%.

*Résine C:*

On opère dans les mêmes conditions que pour la résine B mais en prolongeant le chauffage pendant 2 heures à 70—75°C après la coulée du sulfate de diméthyle. La viscosité finale de la solution de résine à 18% est de 17 centipoises, à 20°C.

*Résine D:*

On opère dans les mêmes conditions que pour la résine B mais en prolongeant le chauffage pendant 5 heures à 70—75°C après la coulée du sulfate de diméthyle. La viscosité de la solution de résine à 18% est de 32 centipoises, à 20°C.

*Résine E:*

On opère dans les mêmes conditions que pour la résine B mais en maintenant le chauffage pendant 5 heures à 85—90°C après la coulée de sulfate de diméthyle. La viscosité de la solution de résine à 18% est de 72 centipoises, à 20°C.

*Résine F:*

On opère dans les mêmes conditions que pour la résine C mais en utilisant 160,5 g (2,52 moles) de formaldéhyde aqueux à 47%.

Exemple 2

Floculation de suspensions d'argiles très fines à 40 mg/l d'eau. Pour obtenir une bonne clarification, il faut utiliser les doses suivantes de floculants:

40 ppm de $Al_2(SO_4)_3 \cdot 18H_2O$ ou
20 ppm de polychlorure d'aluminium ou
5 ppm de résine B (exprimée en sec)

On constate en outre qu'avec les produits minéraux, la décantation est beaucoup plus lente qu'avec la résine B.

Exemple 3

Traitement d'eau de surface en vue d'obtenir une eau présentant une turbidité inférieure à 2 unités JACKSON (U.J.)
*Unités Jackson*

Pour déterminer la turbidité des eaux en unités Jackson, on compare par néphélométrie cette turbidité à une gamme étalon de solutions opalescentes obtenues en diluant avec de l'eau une suspension témoin ayant, par définition, une turbidité de 400 U.J. Pour préparer cette suspension témoin, on mélange 5 ml d'une solution de 1 g de sulfate d'hydrazine dans 100 ml d'eau avec 5 ml d'une solution de 1 g d'hexaméthylène-tétramine dans 100 ml d'eau, puis on dilue ce mélange à 100 ml avec de l'eau.

L'eau de surface à traiter présentait une turbidité de 15 U.J. Pour réduire la turbidité à 2 U.J., il a fallu utiliser 60 ppm de sulfate d'alumine seul ou 40 ppm de sulfate d'alumine et 0,2 ppm d'un floculant anionique constitué par un copolymère anionique acrylamide/acrylate de soude dans le rapport moléculaire 80/20.

On obtient le même résultat avec 5 ppm de la résine B (exprimée en sec) et en outre avec cette résine le volume des boues est 5 fois plus faible qu'avec le sulfate d'alumine, d'où un gain important dans le volume de l'appareillage.

L'eau ainsi traitée peut être utilisée soit dans l'industrie, soit pour l'obtention d'eau potable après d'autres traitements ultérieurs tels que passage sur charbon actif et chloration.

Exemple 4

Essai comparatif des résines A à E

Clarification d'une eau de Seine. — On ajoute à divers échantillons de cette eau respectivement les résines A à F à la dose de 5 ppm. On agite pendant 3 minutes à vitesse rapide, 17 minutes à vitesse lente puis on laisse décanter pendant 10 minutes. On mesure ensuite la turbidité de la couche supérieure.

| | |
|---|---|
| Echantillon témoin sans résine | 20 U.J. |
| résine A | 4,5 U.J. |
| résine B | 3,5 |
| résine C | 3,6 |
| résine D | 3,2 |
| résine E | 5,1 |
| résine F | 4,5 |

Il existe donc relativement peu de différences entre l'efficacité des différentes résines examinées.

### Exemple 5

Essai comparatif des résines A à F

Turbidités obtenues pour des suspensions aqueuses à 0,5 g/l de bentonite après traitement par les diverses résines à raison de 5 ppm de résine.

On prépare une suspension de bentonite en ajoutant cette dernière à l'eau et en laissant gonfler quelques heures sous agitation. On prélève ensuite des échantillons de suspension auxquels on ajoute les différentes résines. Après agitation rapide pendant 2 minutes, puis lente pendant 15 minutes, on laisse décanter pendant 10 minutes puis on prélève une partie de la couche supérieure dont on mesure la turbidité.

| | |
|---|---|
| Echantillon témoin sans résine | 26 U.J. |
| avec résine A | 2,4 U.J. |
| avec résine B | 3,4 |
| avec résine C | 2,5 |
| avec résine D | ·2,5 |
| avec résine E | 3,5 |
| avec résine F | 2,9 |

Comme à l'essai précédent, on constate l'efficacité des différentes résines et les faibles différences entre elles.

### Exemple 6

Déshuilage d'eaux résiduaires de raffinerie.

La teneur en huile de l'effluent est déterminée selon la norme AFNOR T 90—203 d'Août 1973, c'est-à-dire par extraction au tétrachlorure de carbone, séparation des hydrocarbures des autres matières organiques par chromatographie sur colonne de silice synthétique modifiée par 15,5% de magnésie, puis détermination spectrophotométrique dans la région de 3420 nm.

Les effluents contenaient 250 ppm d'huile; ils ont été traités à chaud (60—70°C) par 5 ppm de résine.

Les eaux contenaient après traitement:

— avec la résine A                4 ppm d'huile
— avec la résine B                4 ppm d'huile

Le déshuilage est donc excellent quelle que soit la résine utilisée et il peut être effectué à température relativement élevée.

### Exemple 7

Décoloration d'eaux résiduaires dans l'industrie textile

Des eaux de pH 7, colorées en bleu par des matières colorantes de nature diverses ont été totalement décolorées par traitement avec 200 ppm de résine B, alors que par traitement avec 400 ppm de sulfate d'alumine les eaux étaient encore légèrement colorées.

Exemple 8

Une eau résiduaire contenant 50 ppm d'un colorant acide brun (brun LANAPERL) traitée avec 200 ppm de résine aminoplaste quaternisée (D) (exprimée en sec) est complètement décolorée et peut être réutilisée pour des rinçages.

Exemple 9

Traitement d'un liquide de coupe

Un liquide de coupe, sous forme de solution aqueuse, utilisé dans le travail des métaux et contenant en solution des tensio-actifs, des inhibiteurs de corrosion et des bactéricides est, après utilisation, noirâtre car souillé par des particules métalliques, des huiles, des poussières. Un tel liquide traité avec 200 ppm de résine aminoplaste quaternisée (D) (exprimée en sec) puis filtré, redevient limpide tout en conservant sensiblement ses propriétés anti-corrosives initiales; il peut être réutilisé, au besoin après réajustement de sa teneur dans les différents produits en solution.

## Revendications

1. Procédé de traitement d'eaux brutes ou d'eaux résiduaires peu chargées en matières en suspension ou en émulsion, la concentration en ces matières étant inférieure à 1 g/l, au moyen d'une résine aminoplaste cationique du type produit de condensation d'une amine ou d'un amide et d'un aldéhyde salifié ou quaternisé procédé caractérisé par le fait que, sans l'aide d'autres additifs électrolytes et sans ajuster préalablement le pH du milieu à traiter, on utilise, comme seul agent de traitement une résine aminoplaste quaternisée dans laquelle l'aldéhyde est du glyoxal ou un mélange de glyoxal et de formaldéhyde et le composé azoté est de la mélamine ou de la mélamine avec au maximum 0,2 mole d'urée par mole de mélamine.

2. Procédé selon la revendication 1, caractérisé par le fait que la résine aminoplaste cationique utilisée est quaternisée par le sulfate de diméthyle.

3. Procédé selon la revendication 1 ou 2, caractérisé par le fait que l'on utilise comme résine aminoplaste cationique une résine préparée en condensant, en milieu aqueux, à pH compris entre 5 et 8, à température inférieure à 100°C, la mélamine, ou la mélamine et l'urée avec le glyoxal ou de préférence un mélange de glyoxal et de formaldéhyde puis en quaternisant à la même température de préférence avec du sulfate de diméthyle.

4. Procédé selon l'une quelconque des revendications 1 à 3, caractérisé par le fait que les proportions moléculaires sont, pour une mole de mélamine, 2 à 4 moles de glyoxal et 0,5 à 3 moles de formaldéhyde, de préférence 3 moles de glyoxal et de 1 à 3 moles de formaldéhyde.

5. Procédé selon l'une quelconque des revendications 1 à 4, caractérisé par le fait que la quaternisation est effectuée avec 0,2 à 0,5 mole de sulfate de diméthyle par mole de mélamine.

6. Procédé selon l'une quelconque des revendications 1 à 5, caractérisé par le fait que le résine aminoplaste cationique est utilisée à des doses comprises entre 2 ppm et 500 ppm.

7. Procédé selon la revendication 6, caractérisé par le fait que la résine aminoplaste cationique est utilisée pour des eaux brutes à des doses comprises entre 4 et 20 ppm.

8. Procédé selon la revendication 6, caractérisé par le fait que la résine aminoplaste cationique est utilisée pour des eaux résiduaires à des doses comprises entre 30 et 300 ppm.

9. Procédé selon l'une quelconque des revendications 1 à 8, caractérisé en ce que les eaux résiduaires traitées sont des solutions aqueuses employées comme liquides de coupe.

## Patentansprüche

1. Verfahren zur Behandlung von Rohwasser oder Abwässern mit einem geringen Gehalt an suspendierten oder emulgierten Stoffen, wobei die Konzentration dieser Stoffe unterhalb von 1 g/l liegt, unter Verwendung eines kationischen Aminoplastharzes in Form eines in ein Salz umgewandelten oder quaternisierten Kondensationsproduktes eines Amins oder eines Amids und eines Aldehyds, dadurch gekennzeichnet, daß man ohne Zuhilfenahme von anderen Elektrolytzusätzen und ohne vorherige Einstellung des pH-Wertes des zu behandelnden Mediums als einziges Behandlungsmittel ein quaternisiertes Aminoplastharz verwendet, in welchem der Aldehyd Glyoxal oder ein Gemisch aus Glyoxal und Formaldehyd ist, und die Stickstoffverbindung Melamin oder Melamin mit maximal 0,2 mol Harnstoff pro mol Melamin ist.

2. Verfahren nach Anspruch 1, dadurch gekennzeichnet, daß das verwendete kationische Aminoplastharz mit Dimethylsulfat quaternisiert ist.

3. Verfahren nach Anspruch 1 oder 2, dadurch gekennzeichnet, daß man als kationisches Aminoplastharz ein Harz verwendet, das durch Kondensation von Melamin oder Melamin und Harnstoff mit Glyoxal oder vorzugsweise einer Mischung von Glyoxal und Formaldehyd in wässrigem Milieu bei pH 5 bis 8 und einer Temperatur unterhalb 100°C und anschließende Quaternisierung bei derselben Temperatur vorzugsweise mit Dimethylsulfat hergestellt wurde.

4. Verfahren nach einem der Ansprüche 1 bis 3, dadurch gekennzeichnet, daß folgende Molverhältnisse verwendet werden: auf ein Mol Melamin 2 bis 4 Mol Glyoxal und 0,5 bis 3 Mol Formaldehyd,

## 0 005 390

vorzugsweise 3 Mol Glyoxal und 1 bis 3 Mol Formaldehyd.

5. Verfahren nach einem der Ansprüche 1 bis 4, dadurch gekennzeichnet, daß die Quaternisierung mit 0,2 bis 0,5 Mol Dimethylsulfat je Mol Melamin durchgeführt wird.

6. Verfahren nach einem der Ansprüche 1 bis 5, dadurch gekennzeichnet, daß das kationische Aminoplastharz in Mengen zwischen 2 ppm und 500 ppm eingesetzt wird.

7. Verfahren nach Anspruch 6, dadurch gekennzeichnet, daß das kationische Aminoplastharz für Rohwasser in Mengen zwischen 4 ppm und 20 ppm eingesetzt wird.

8. Verfahren nach Anspruch 6, dadurch gekennzeichnet, daß das kationische Aminoplastharz für Abwässer in Mengen zwischen 30 und 300 ppm eingesetzt wird.

9. Verfahren nach einem der Ansprüche 1 bis 8, dadurch gekennzeichnet, daß die behandelten Abwässer wässrige Lösungen sind, welche als Schneidflüssigkeit verwendet wurden.

### Claims

1. A process for treating raw or residual waters little loaded with suspension or emulsion materials, the concentration of such materials being lower than 1 g/l, by means of a cationic aminoplast resin of the type of condensation product of an amine or amide and a salified or quaternized aldehyde, said process being characterized by using, without the help of other electrolytic additives and without previously adjusting the pH of the medium to be treated, a quaternized aminoplast resin as the single treating agent, in which the aldehyde is glyoxal or a mixture of glyoxal and formaldehyde and the nitrogenous compound is melamine or melamine with a maximum of 0.2 moles of urea per mole of melamine.

2. A process according to claim 1, characterized in that the cationic aminoplast resin used is quaternized by dimethyl sulfate.

3. A process according to claim 1 or 2, characterized by using as the cationic aminoplast resin, a resin prepared by condensing in an aqueous medium, at a pH of between 5 and 8, at a temperature lower than 100°C, the melamine or melamine and urea with glyoxal or preferably, a mixture of glyoxal and formaldehyde and then, quaternizing at the same temperature, preferably with dimethyl sulfate.

4. A process according to any of claims 1 to 3, characterized in that the molecular proportions for one mole of melamine are from 2 to 4 moles of glyoxal and 0.5 to 3 moles of formaldehyde, preferably, 3 moles of glyoxal and from 1 to 3 moles of formaldehyde.

5. A process according to any of claims 1 to 4, characterized by effecting quaternization with 0.2 to 0.5 moles of dimethyl sulfate per one mole of melamine.

6. A process according to any of claims 1 to 5, characterized by using the cationic aminoplast resin in quantities of between 2 ppm and 500 ppm.

7. A process according to claim 6, characterized by using the cationic aminoplast resin with raw waters in quantities of between 4 and 20 ppm.

8. A process according to claim 6, characterized by using the cationic aminoplast resin with residual waters in quantities of between 30 and 300 ppm.

9. A process according to any of claims 1 to 8, characterized in that the treated residual waters are aqueous solutions used as cutting tool liquids.